# EUROPÄISCHE PATENTSCHRIFT

(11) **EP 3 555 715 B1**
(45) Veröffentlichungstag und Bekanntmachung des Hinweises auf die Patenterteilung: **24.08.2022**
(21) Anmeldenummer: 17801461.9
(22) Anmeldetag: 22.11.2017
(51) Int. Cl.: G05B 19/042, G05B 19/418

(54) **VERFAHREN UND BEDIENEINHEIT ZUR FEHLERBEHEBUNG IN EINER ANLAGE DER AUTOMATISIERUNGSTECHNIK**
METHOD AND OPERATING UNIT FOR TROUBLESHOOTING ERRORS IN A SYSTEM OF AUTOMATION TECHNOLOGY
PROCÉDÉ ET UNITÉ DE COMMANDE POUR ÉLIMINER DES DÉFAILLANCES DANS UNE INSTALLATION DE LA TECHNOLOGIE D'AUTOMATISATION

(30) Priorität: 19.12.2016 DE 102016124865
(43) Veröffentlichungstag der Anmeldung: 23.10.2019
(73) Patentinhaber: Endress+Hauser Process Solutions AG, 4153 Reinach (CH)
(72) Erfinder: SOTRIFFER, Ingomar, 79194 Gundelfingen (DE); MAYER, Michael, 4104 Oberwil (CH); PFLUG, Jan, 4056 Basel (CH); LUBER, Werner, 4123 Allschwil (CH)
(74) Vertreter: Andres, Angelika Maria
(86) Internationale Anmeldenummer: PCT/EP2017/080045
(87) Internationale Veröffentlichungsnummer: WO 2018/114184

(56) Entgegenhaltungen:
- DE-A1-102012 108 990
- US-A1- 2012 040 698

## Beschreibung

Die Erfindung betrifft ein Verfahren zur Fehlerbehebung in einer Anlage der Automatisierungstechnik, wobei die Anlage eine Vielzahl von Feldgeräten aufweist, welche an verteilten Einbauorten angebracht sind. Des Weiteren betrifft die Erfindung eine Bedieneinheit zum Einsatz in dem erfindungsgemäßen Verfahren.

Aus dem Stand der Technik sind bereits Feldgeräte bekannt geworden, die in industriellen Anlagen zum Einsatz kommen. In der Prozessautomatisierung ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Solche Feldgeräte sind bei größeren Anlagen, insbesondere bei Produktionsanlagen, meist über einen sehr weiten Bereich verteilt angeordnet. Im Falle eines Fehlers oder auch zur routinemäßigen Wartung, müssen diese Feldgeräte in möglichst kurzer Zeit identifiziert und lokalisiert werden, um vor Ort den Fehler zu beseitigen, bzw. die Wartung durchführen zu können. Hierbei ist meist die genaue Lokalisierung eines Feldgeräts problematisch.

Die US 2012/0040698 A1 beschreibt eine Bedieneinheit, welche ein GPS-Modul aufweist. Durch Anzeigen einer Karte einer Anlage der Prozessautomatisierung auf dem Display der Bedieneinheit, welche die aktuelle Position des Servicetechnikers und die Ortspositionen von Komponenten der Anlage visualisiert, wird ein Servicetechniker zu den verschiedenen Komponenten geführt.

Die DE 10 2012 108 99 A1 beschreibt mehrere Varianten, mittels welcher Feldgeräte in einer Anlage der Prozessautomatisierung lokalisiert werden können. Beispielsweise sendet ein Servicetechniker die Identifizierungsinformationen eines Feldgeräts an eine Datenbank. Diese teilt dem Servicetechniker daraufhin mit, an welcher Stelle der Anlage sich das Feldgerät befindet, so dass dieser mit Hilfe seiner Bedieneinheit zum Installationsort des Feldgeräts geführt wird. Alternativ erhebt der Servicetechniker mittels seiner Bedieneinheit seinen aktuellen Standort. Die Datenbank übermittelt dem Servicetechniker daraufhin Ortsinformationen derjenigen Feldgeräte der Anlage, welche sich in einem definierten Umkreis ausgehend von der Ortsposition des Servicetechnikers befinden.

In beiden Fällen müssen die aufzusuchenden Feldgeräte von Hand ausgewählt werden. Hierfür muss dem Servicetechniker bekannt sein, welche Feldgeräte im Moment einen Fehler aufweisen. Spontan auftretende Fehler an Feldgeräten sind dem Servicetechniker nicht bekannt, während er sich in der Anlage aufhält.

Ausgehend von dieser Problematik liegt der Erfindung die Aufgabe zugrunde, ein Verfahren und eine Bedieneinheit vorzustellen, welches es erlauben, fehlerhafte Feldgeräte einer Anlage der Prozessautomatisierung auf effiziente und zeitsparende Art und Weise zu warten.

Die Aufgabe wird durch ein Verfahren zur Fehlerbehebung in einer Anlage der Automatisierungstechnik gelöst, wobei die Anlage eine Vielzahl von Feldgeräten aufweist, welche an verteilten Einbauorten angebracht sind, welches Verfahren umfasst:
- Erstellen einer Liste derjenigen Feldgeräte, für welche aufgrund zumindest eines Fehlers ein Servicestatus, bzw. ein Diagnosestatus eingetragen ist, sowie zu den jeweiligen Einbauorten der Feldgeräte korrespondierende Ortsinformationen, mittels einer Datenbank, wobei in der Datenbank zu jedem der Feldgeräte dessen aktueller Status, sowie die Ortsinformationen gespeichert sind, wobei die Datenbank eine Funkeinheit aufweist;
- Suchen nach per Funk kontaktierbaren Bedieneinheiten mittels der Funkeinheit der Datenbank;
- Im Falle dass zumindest eine Bedieneinheit gefunden wurde, Übermitteln zumindest eines Teils der Liste an die Bedieneinheit mittels der Funkeinheit;
- Auswählen zumindest eines der in der Liste befindlichen Feldgeräte mittels der Bedieneinheit;
- Erheben der aktuellen Ortsposition eines Bedieners mittels der Bedieneinheit;
- Lokalisieren des ausgewählten Feldgeräts unter Einbeziehung der aktuellen Ortsposition der Bedieneinheit und der Ortsinformation des ausgewählten Feldgeräts durch die Bedieneinheit;
- Aufsuchen des lokalisierten Feldgeräts durch den Bediener mithilfe der Bedieneinheit; und
- Verbinden der Bedieneinheit mit dem aufgesuchten Feldgerät und Bedienen des Feldgeräts mittels der Bedieneinheit zum Beheben des Fehlers.

Der große Vorteil des erfindungsgemäßen Verfahrens besteht darin, dass Fehler an Feldgeräten auf einfache Art und Weise dem Servicepersonal der Anlage gemeldet werden können und dadurch zeitnah und effektiv behoben werden können. Ein Bediener muss die betroffenen Feldgeräte nach Erhalt der Liste nicht erst mühselig ausfindig machen, beispielsweise mittels eines Anlagenplans, sondern bekommt die Ortsinformationen, und somit den Einbauort des Feldgeräts direkt mit der Liste angezeigt und wird mithilfe der Bedieneinheit zu diesem Einbauort geführt. Die Datenbank befindet sich in dieser Variante im Leitsystem, ist mit einer Rechnereinheit verbunden und weist eine Funkeinheit auf.

Bei der Bedieneinheit handelt es sich bevorzugt um eine mobile Bedieneinheit. Solch eine Bedieneinheit weist Bedienelemente, beispielsweise Tasten, und einen Bildschirm zur Anzeige der bereitgestellten Liste, sowie zumindest eine Kommunikationsschnittstelle zum Verbinden mit dem Feldgerät und mit der Datenbank auf. Die Anmelderin produziert und vertreibt eine solche Bedieneinheit unter der Bezeichnung "Field Xpert". Alternativ handelt es sich bei der Bedieneinheit um ein mobiles Endgerät, insbesondere um ein Tablet oder um ein Smartphone. Es kann sich bei der Bedieneinheit auch alternativ um eine Rechnereinheit, beispielsweise einen Laptop, handeln.

Bei der Datenbank handelt es sich beispielsweise um eine Datenbank, welche in ein Kommunikationsnetzwerk in der Leitebene der Anlage eingebunden ist. Die Datenbank führt den Verfahrensschritt des Bereitstellens der Liste entweder selbstständig durch, oder ist mit einer Rechnereinheit verbunden, welche auf die Datenbank zugreift und die Liste anschließend erstellt und bereitstellt. Es kann auch vorgesehen sein, dass die Datenbank in einer Cloud-Umgebung eingebettet ist, wobei die Bedieneinheit und/oder die Rechnereinheit die Datenbank über das Internet kontaktieren.

Bei dem Bediener handelt es sich insbesondere um einen Servicetechniker.

Feldgeräte, welche im Zusammenhang mit dem erfindungsgemäßen Verfahren erwähnt werden, sind bereits im einleitenden Teil der Beschreibung beispielhaft beschrieben.

Gemäß einer vorteilhaften Ausgestaltung des erfindungsgemäßen Verfahrens ist vorgesehen, dass von der Datenbank die aktuellen Ortspositionen der gefundenen Bedieneinheit abgefragt werden, und dass die Datenbank die Liste an diejenige Bedieneinheit übermittelt wird, deren aktuelle Ortsposition sich am nächstgelegenen zu zumindest einem der in der Liste enthaltenen Feldgeräte befindet. Im Falle eines auftretenden Fehlers an einem Feldgerät kann hierdurch sichergestellt werden, dass das fehlerhafte Feldgerät möglichst schnell von einem Bediener aufgesucht werden kann.

Gemäß einer bevorzugten Ausgestaltung des erfindungsgemäßen Verfahrens ist vorgesehen, dass die Feldgeräte in der Liste priorisiert aufgelistet werden, insbesondere nach der Kritikalität der jeweiligen Feldgeräte für einen Prozess der Anlage und/oder nach der Schwere des aufgetretenen Fehlers von einem der Feldgeräte. Ein Bediener wird hierdurch bei der Planung einer Route unterstützt, indem er die Schwere eines Fehlers abschätzen kann. Unter dem Begriff "Kritikalität" wird eine Schwere eines Fehlers verstanden, welche Schwere gleichzeitig eine Abschätzung an den Grad der Wahrscheinlichkeit liefert, dass ein Prozess durch den Fehler beeinträchtigt oder zum Erliegen kommen könnte, bzw. ein Gefährdungspotential gegeben ist.

Gemäß einer bevorzugten Weiterbildung des erfindungsgemäßen Verfahrens ist vorgesehen, dass ein Service-Pfad erstellt wird, indem die zumindest eine Bedieneinheit nacheinander die Feldgeräte entsprechend der auf der Liste angegebenen Reihenfolge lokalisiert und
wobei der Bediener die Feldgeräte entsprechend des erstellten Service-Pfads aufsucht und bedient. Hierbei wird der Bediener der Reihe nach zu denjenigen Feldgeräten geführt, welche eine hohe Priorität aufweisen. Es kann aber alternativ auch vorgesehen sein, die Feldgeräte nach ihrer Entfernung von der aktuellen Ortsposition des Bedieners aus zu sortieren, so dass für den Bediener eine zeiteffiziente Route erstellt wird.

Gemäß einer vorteilhaften Ausgestaltung des erfindungsgemäßen Verfahrens ist vorgesehen, dass diejenigen Feldgeräte, für welche ein Servicestatus, bzw. ein Diagnosestatus eingetragen ist, zusammen mit der aktuellen Ortsposition der Bedieneinheit auf einer Karte auf der Bedieneinheit visualisiert werden. Insbesondere in einer komplexen Topologie der Anlage wird dem Bediener das Auffinden des ausgewählten Feldgeräts erheblich erleichtert.

Gemäß einer vorteilhaften Ausgestaltung des erfindungsgemäßen Verfahrens ist vorgesehen, dass die Datenbank während des Aufsuchens des lokalisierten Feldgeräts überprüft, ob zum Beheben des Fehlers benötigte Informationen, bzw. Dateien auf der Bedieneinheit vorhanden sind.

Gemäß einer bevorzugten Weiterbildung des erfindungsgemäßen Verfahrens ist vorgesehen, dass im Falle, dass die zum Beheben des Fehlers benötigte Informationen, bzw. Dateien nicht auf der Bedieneinheit vorhanden sind, diese automatisiert auf die Bedieneinheit geladen werden. Der Bediener muss sich diese Informationen, bzw. Dateien nicht aufwendig separat besorgen, sondern bekommt diese automatisiert auf die Bedieneinheit geladen. Insbesondere ist vorgesehen, dass diese Informationen, bzw. Dateien nicht nur während des Aufsuchen des lokalisierten Feldgeräts überprüft, sondern während des Aufsuchens auch gleich auf die Bedieneinheit geladen werden, so dass diese dem Bediener bei der Ankunft am aufgesuchten Feldgeräts unmittelbar zur Verfügung stehen.

Gemäß einer besonders bevorzugten Weiterbildung des erfindungsgemäßen Verfahrens ist vorgesehen, dass die zum Beheben des Fehlers benötigten Informationen, bzw. Dateien von der Datenbank auf die Bedieneinheit geladen werden. Es ist hierbei vorgesehen, dass die Datenbank selbst die benötigten Informationen, bzw. Daten vorhält. Alternativ versendet die Datenbank eine Netzwerkadresse, insbesondere eine Internet-Netzwerkadresse oder eine Netzwerkadresse des Kommunikationsnetzwerks der Anlage, an die Bedieneinheit, zusammen mit der Aufforderung, die benötigten Informationen, bzw. Dateien von dieser Netzwerkadresse auf die Bedieneinheit zu laden.

Gemäß einer besonders bevorzugten Weiterbildung des erfindungsgemäßen Verfahrens ist vorgesehen, dass als zum Beheben des Fehlers benötigte Datei ein zur Bedienung des Feldgeräts benötigter Gerätetreiber, bzw. eine Gerätebeschreibung, auf die Bedieneinheit geladen wird.

Gemäß einer besonders bevorzugten Weiterbildung des erfindungsgemäßen Verfahrens ist vorgesehen, dass als zum Beheben des Fehlers benötigte Information ein Bedienhandbuch und/oder eine Gerätedokumentation des lokalisierten Feldgeräts auf die Bedieneinheit geladen werden. Des Weiteren kann beispielsweise eine Tabelle mit der Bedeutung von auftretenden Fehlercodes geladen werden.

Gemäß einer bevorzugten Ausgestaltung des erfindungsgemäßen Verfahrens ist vorgesehen, dass während des Auffindens des lokalisierten Feldgeräts Informationen bezüglich der Einbauart des Feldgeräts, insbesondere dessen Einbauhöhe und/oder dessen Einbauneigung, bzw. Einbauwinkel, von der Datenbank auf die Bedieneinheit geladen und dem Bediener angezeigt werden. Es kann außerdem, oder alternativ, vorgesehen sein, eine Visualisierung, insbesondere ein Foto, des Feldgeräts und/oder des Einbauorts des Feldgeräts zu laden und dem Bediener anzuzeigen.

Des Weiteren können auch Zusatzinformationen bezüglich des Einbauorts auf der Datenbank hinterlegbar sein, welche auf die Bedieneinheit geladen und dem Bediener angezeigt werden können. Beispielsweise wird dem Bediener der Hinweis mitgeteilt, dass eine Leiter benötigt wird, um das Feldgerät zu erreichen, oder eine spezielle Schutzausrüstung von Seiten des Bedieners benötigt wird.

Gemäß einer vorteilhaften Ausgestaltung des erfindungsgemäßen Verfahrens ist vorgesehen, dass die Liste auf diejenigen Feldgeräte beschränkt wird, deren jeweiliger Einbauort sich innerhalb eines festgelegten Umkreises von der aktuellen Ortsposition der Bedieneinheit aus befindet.

Gemäß einer vorteilhaften Ausgestaltung des erfindungsgemäßen Verfahrens ist vorgesehen, dass die Datenbank in regelmäßigen, bzw. zyklischen Zeitabständen den aktuellen Status der Feldgeräte aktualisiert. Des Weiteren kann vorgesehen sein, dass ein Feldgerät bei Auftreten eines Fehlers selbstständig eine Aktualisierung der Datenbank initialisiert, bzw. bewirkt. Hierfür sendet das Feldgerät seinen aktuellen Status an die Datenbank, oder übermittelt einen Befehl an die Datenbank, dass diese den aktuellen Status aller Feldgeräte abruft.

Gemäß einer bevorzugten Ausgestaltung des erfindungsgemäßen Verfahrens ist vorgesehen, dass die Bedieneinheit mittels einer Funkverbindung, insbesondere mittels WLAN, LTE, 5G oder mittels eines Meshed Networks, mit der Datenbank in Kommunikationsverbindung steht.

Gemäß einer bevorzugten Ausgestaltung des erfindungsgemäßen Verfahrens ist vorgesehen, dass die Bedieneinheit mit dem aufgesuchten Feldgerät mittels einer drahtlosen oder einer drahtgebundenen Kommunikationsverbindung verbunden wird.

Im Falle einer drahtgebundenen Kommunikationsverbindung ist die Bedieneinheit beispielsweise mit einer Serviceschnittstelle verbunden. Diese ist bei beispielsweise einem von der Anmelderin produzierten Feldgerät eine CDI(Common Data Interface)-Schnittstelle. Die Bedieneinheit kann aber auch an eine USB-Schnittstelle des Feldgeräts angeschlossen werden.

### Anlage 1

Des Weiteren kann vorgesehen sein, die Bedieneinheit an ein Feldbusnetzwerk anzuschließen, mittels welchem das Feldgerät mit einer übergeordneten Einheit in Kommunikationsverbindung steht. Die Bedieneinheit stellt nach dem Verbinden mit dem Feldbusnetzwerk einen Teilnehmer des Feldbusses dar und kann mit dem Feldgerät über den Feldbus kommunizieren. Bei dem Feldbus handelt es sich beispielsweise um HART, Foundation Fieldbus, CAN-Bus, Modbus oder Profibus PA/DP.

Im Falle einer drahtlosen Kommunikationsverbindung ist die Bedieneinheit mit dem Feldgerät insbesondere über Bluetooth, ZigBee oder WLAN mit dem Feldgerät verbunden.

Des Weiteren wird die Aufgabe durch eine Bedieneinheit ausgestaltet zum Einsatz in dem erfindungsgemäßen Verfahren gelöst.

Die Erfindung wird anhand der nachfolgenden Figuren näher erläutert. Es zeigen
Fig. 1: ein Ausführungsbeispiel; und
Fig. 2: ein Beispiel einer im Display der Bedieneinheit visualisierten Karte.

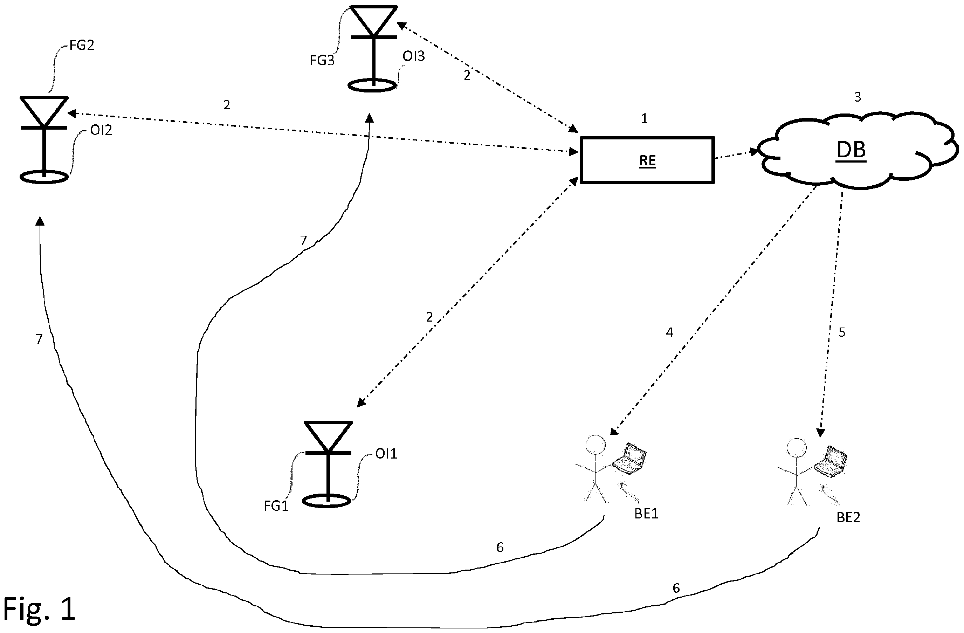

Fig. 1 zeigt ein Ausführungsbeispiel. In einer Anlage der Prozessautomatisierung, welche die Feldgeräte FG1, FG2, FG3 aufweist, befinden sich zwei Bediener mit Bedieneinheiten BE1, BE2. Diese Bediener sind Servicetechniker, welche sich zur Wartung der Feldgeräte FG1, FG2, FG3 in der Anlage aufhalten.

In einem ersten Verfahrensschritt 1 fragt eine Recheneinheit RE Informationen von den Feldgeräten FG1, FG2, FG3 ab. Das Abfragen geschieht beispielsweise mittels einer Funkverbindung, wobei die Feldgeräte FG1, FG2, FG3 in diesem Fall Funkantennen und/oder Funkmodule aufweisen. Bei der Recheneinheit RE handelt es sich beispielsweise um einen Workstation-PC, welcher sich in der Leitebene der Anlage befindet. Auf der Recheneinheit RE ist eine Rahmenapplikation installiert. Bei der Rahmenapplikation handelt es sich insbesondere um einen FDT-Host, der Gerätetreiber in Gestalt von DTMs (Device Type Manager) für jedes der Feldgeräte FG1, FG2, FG3 aufweist. Die Gerätetreiber dienen zur Kommunikation der Recheneinheit RE mit den Feldgeräten FG1, FG2, FG3.

Bei den abzufragenden Informationen handelt es sich um den Status der Feldgeräte FG1, FG2, FG3. Dieser liegt insbesondere in einer Form nach der Namur Empfehlung NE107 vor. Mögliche Status sind beispielsweise "Feldgerät in Ordnung", "Fehler liegt vor", "Wartung erforderlich", etc. Von dem Anlagentreiber kann in der Recheneinheit RE eingestellt werden, wie häufig und in welchen Zeitintervallen die Abfrage der Gerätestatus erfolgen soll.

In einem zweiten Verfahrensschritt 2 senden die Feldgeräte FG1, FG2, FG3 jeweils ihren aktuellen Gerätestatus an die Recheneinheit. Feldgerät FG1 übermittelt hierbei den Status "Wartung erforderlich"; Feldgerät FG2 übermittelt hierbei den Status "Feldgerät in Ordnung"; Feldgerät FG3 übermittelt hierbei den Status "Fehler liegt vor". Die Recheneinheit RE ist mit einer Datenbank DB verknüpft und übermittelt die ausgelesenen Status der Feldgeräte FG1, FG2, FG3 an die Datenbank DB.

In einem dritten Verfahrensschritt 3 aktualisiert die Datenbank DB die ausgelesenen Status der Feldgeräte FG1, FG2, FG3. Zusätzlich enthält die Liste die Ortsinformationen OI1, OI2, OI3 der jeweiligen Feldgeräte, also die geographische Position, an welcher die Feldgeräte FG1, FG2, FG3 installiert sind. Diese Ortsinformationen OI1, OI2, OI3 werden beispielsweise bei Installation der Feldgeräte FG1, FG2, FG3 in der Anlage erhoben und in die Datenbank eingepflegt. Anschließend wird eine Liste derjenigen Feldgeräte FG1, FG2, FG3 erstellt, deren aktueller Status ein Servicestatus, bzw. ein Diagnosestatus ist. In diesem Ausführungsbeispiel werden daher Feldgeräte FG1 und Feldgerät FG3 auf der Liste geführt.

Diese Liste wird anschließend nach der Kritikalität der jeweiligen Status, bzw. des damit verbundenen Fehlers sortiert. Da Feldgerät FG3 einen Fehlerfall meldet, ist dieser höher als der anstehende Wartungsbedarf des Feldgeräts FG1 einzuordnen, weswegen Feldgerät FG3 an erster Position der Liste aufgeführt ist.

In einem vierten Verfahrensschritt 4 wird ein Teil der Liste, genauer der in der Liste eingetragene, hochkritische Status von Feldgerät FG3, sowie die Ortsinformation OI3 des Feldgerätes FG3, von der Datenbank DB an eine Bedieneinheit BE1 übermittelt. Hierfür startet die Datenbank DB per Funk eine Suchanfrage nach in der Anlage befindlichen Bedieneinheiten und findet die beiden Bedieneinheiten BE1, BE2. Die Datenbank DB fragt anschließend mittels der Funkverbindung die aktuellen Ortspositionen der Bedieneinheiten BE1, BE2 ab. Durch Vergleich der Ortsinformation OI2 des Feldgeräts F3 und den aktuellen Ortspositionen der Bedieneinheiten BE1, BE2 wird festgestellt, dass sich die Bedieneinheit BE1 näher an Feldgerät FG3 befindet als die Bedieneinheit BE2, wodurch dieser der Status und die Ortsinformation OI3 von Feldgerät FG3 übermittelt wird. Nach Bestätigung des Bedieners, dass das Feldgerät FG3 zur Fehlerbehebung aufgesucht werden soll, erhebt die Bedieneinheit BE 1 ihre aktuelle Ortsposition und vergleicht diese mit der Ortsinformation des Feldgeräts FG3, lokalisiert das Feldgerät FG3 also. Anschließend stellt diese den Standort des Bedieners und des Feldgeräts FG3 auf ihrem Display in einer Karte KA grafisch dar.

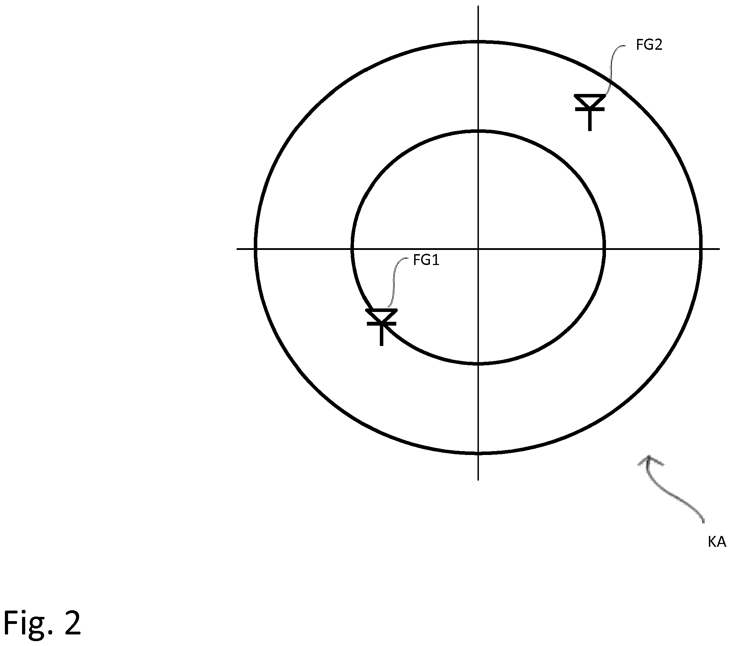

Ein Beispiel einer solchen Karte KA ist in Fig. 2 schematisch dargestellt. In der Mitte befindet sich die aktuelle Ortsposition der Bedieneinheit BE1, BE2. Die Umkreise geben eine definierte Länge, beispielsweise 100 Meter an. Bewegt sich der Bediener, so verschiebt sich die Mittelposition der Karte KA. Eine solche Karte KA ist beispielsweise in der US 2012/0040698 A1 beschrieben.

In einem fünften Verfahrensschritt 5 wird der in der Liste eingetragene, weniger kritische Status des Feldgeräts FG1 an die Bedieneinheit BE2 übermittelt. Entweder wird dies analog zu Verfahrensschritt 4 von der Datenbank DB automatisiert übernommen, oder der Bediener der Bedieneinheit BE2 lädt sich die Liste selbst von der Datenbank DB auf die Bedieneinheit BE1. Der Bediener wählt anschließend das Feldgerät FG1 aus der Liste aus, wodurch analog zu Verfahrensschritt 4 das Feldgerät FG1 lokalisiert wird.

In einem sechsten Verfahrensschritt 6 wird der jeweilige Bediener der Bedieneinheiten BE1, BE2 mittels der angezeigten Karte KA zu den jeweils lokalisierten Feldgeräten FG1, FG3 geführt. Hierfür wird beispielsweise ein GPS-Modul der Bedieneinheiten BE1, BE2 verwendet. Zur Navigation können aber auch andere Verfahren, wie beispielsweise Ortung mittels Funk-Signalstärken (Feldgerät FG1, FG2, FG3 zu Bedieneinheit) oder Triangulation durch ein Mobilfunknetzwerk, eingesetzt werden.

Während die Bediener sich zu den lokalisierten Feldgeräten FG1, FG2 begeben, prüft die Datenbank, ob alle zur Behebung des jeweiligen Fehlers des Feldgeräts FG3, bzw. zur erfolgreichen Wartung des Feldgeräts FG1 erforderlichen Informationen, bzw. Dateien auf den Bedieneinheiten BE1, BE2 vorliegen. Damit beispielsweise die Bedieneinheiten BE1, BE2 mit den jeweiligen Feldgeräten FG1, FG3 kommunizieren können, benötigen die Bedieneinheiten BE1, BE2 den jeweils korrekten Gerätetreiber der Feldgeräts FG1, FG3. Falls dieser nicht auf den Bedieneinheiten BE1, BE2 vorhanden ist, übermittelt die Datenbank DB diesen jeweils an die Bedieneinheiten BE1, BE2. Das Prüfen und Übermitteln wird für weitere Informationen, bzw. Dateien, welche für den Bediener nützlich sind, insbesondere die Gerätedokumentation, die Einbauhöhe des Feldgeräts, ein Foto des Installationsorts, etc. wiederholt. Insbesondere ist vorgesehen, dass beim Eintreffen der Bediener an den jeweiligen Feldgeräten FG1, FG3 alle relevanten Informationen auf den Bedieneinheiten BE1, BE2 vorhanden sind.

In einem abschließenden siebten Verfahrensschritt 7 werden bei Antreffen der Bediener an den jeweiligen Feldgeräten FG1, FG3 die Informationen dem Benutzer angezeigt, bzw. die Dateien auf den jeweiligen Bedieneinheiten BE ausführungsbereit geladen. Mittels der Informationen kann der Bediener die jeweilige Bedieneinheit BE1, BE2 schnellstmöglich mit dem entsprechenden Feldgerät FG1, FG3 verbinden, insbesondere drahtgebunden oder drahtlos. Beispielsweise wurde auch eine Schritt-für-Schritt-Anleitung geladen, welche den Benutzer durch den Vorgang des Verbindens führt.

Nach dem Verbinden wird mittels des ausführbereiten Gerätetreibers eine Kommunikationseinheit zwischen der jeweiligen Bedieneinheit BE1, BE2 und dem entsprechenden Feldgerät FG1, FG3 aufgebaut. Die Bediener können die entsprechenden Feldgeräte FG1, FG3 nun auf einfache Art und Weise bedienen und die Wartung durchführen, bzw. den Fehler am Feldgerät FG3 beheben. Auch hierfür können weitere, analog zu Verfahrensschritt 6 auf die Bedieneinheit BE1, BE3 geladene Informationen, beispielsweise eine Tabelle mit der Bedeutung von Fehlercodes, angezeigt werden.

Es versteht sich von selbst, dass das erfindungsgemäße Verfahren mit jeder Art von Feldgeräten eingesetzt werden kann. Feldgeräte, welche im Zusammenhang mit diesem erfindungsgemäßen Verfahren genannt werden, sind bereits im einleitenden Teil der Beschreibung beispielhaft beschrieben. Es kann des Weiteren vorgesehen sein, dass die Datenbank DB auch Teile der Liste mit Feldgeräten mit weniger kritischen Wartungsstatus automatisiert an Bedieneinheiten BE1, BE2 übermittelt, oder dass auch Teile der Liste mit hochkritischen Status von Feldgeräten manuell von den Bedieneinheiten BE1, BE2 von der Datenbank geladen werden. Des Weiteren kann auch die gesamte Liste an die Bedieneinheiten BE1, BE2 übermittelt werden und der Bediener wählt eines der auf der Liste befindlichen Feldgeräte FG1, FG3 manuell aus.

FG1, FG3 verbinden, insbesondere drahtgebunden oder drahtlos. Beispielsweise wurde auch eine Schritt-für-Schritt-Anleitung geladen, welche den Benutzer durch den Vorgang des Verbindens führt. Nach dem Verbinden wird mittels des ausführbereiten Gerätetreibers eine Kommunikationseinheit zwischen der jeweiligen Bedieneinheit BE1, BE2 und dem entsprechenden Feldgerät FG1, FG3 aufgebaut. Die Bediener können die entsprechenden Feldgeräte FG1, FG3 nun auf einfache Art und Weise bedienen und die Wartung durchführen, bzw. den Fehler am Feldgerät FG3 beheben. Auch hierfür können weitere, analog zu Verfahrensschritt 6 auf die Bedieneinheit BE1, BE3 geladene Informationen, beispielsweise eine Tabelle mit der Bedeutung von Fehlercodes, angezeigt werden.

Es versteht sich von selbst, dass das erfindungsgemäße Verfahren mit jeder Art von Feldgeräten eingesetzt werden kann. Feldgeräte, welche im Zusammenhang mit diesem erfindungsgemäßen Verfahren genannt werden, sind bereits im einleitenden Teil der Beschreibung beispielhaft beschrieben. Es kann des Weiteren vorgesehen sein, dass die Datenbank DB auch Teile der Liste mit Feldgeräten mit weniger kritischen Wartungsstatus automatisiert an Bedieneinheiten BE1, BE2 übermittelt, oder dass auch Teile der Liste mit hochkritischen Status von Feldgeräten manuell von den Bedieneinheiten BE1, BE2 von der Datenbank geladen werden. Des Weiteren kann auch die gesamte Liste an die Bedieneinheiten BE1, BE2 übermittelt werden und der Bediener wählt eines der auf der Liste befindlichen Feldgeräte FG1, FG3 manuell aus.

### Bezugszeichenliste

- 1, 2, 3, 4, 5, 6, 7: Verfahrensschritte
- BE: Bedieneinheit
- DB: Datenbank
- FG1, FG2, FG3: Feldgerät
- KA: Karte
- OI1, OI2, OI3: Ortsinformationen der Feldgeräte
- RE: Rechnereinheit

## Patentansprüche

1. Verfahren zur Fehlerbehebung in einer Anlage der Automatisierungstechnik, wobei die Anlage eine Vielzahl von Feldgeräten (FG1, FG2, FG3) aufweist, welche an verteilten Einbauorten angebracht sind, welches Verfahren umfasst:
- Erstellen einer Liste derjenigen Feldgeräte (FG1, FG2, FG3), für welche aufgrund zumindest eines Fehlers ein Servicestatus, bzw. ein Diagnosestatus eingetragen ist, sowie zu den jeweiligen Einbauorten der Feldgeräte (FG1, FG2, FG3) korrespondierende Ortsinformationen (OI1, OI2, OI3), mittels einer Datenbank (DB), wobei in der Datenbank (DB) zu jedem der Feldgeräte (FG1, FG2, FG3) dessen aktueller Status, sowie deren Ortsinformationen (OI1, OI2, OI3) gespeichert sind,
wobei die Datenbank (DB) eine Funkeinheit aufweist;
- Suchen nach per Funk kontaktierbaren Bedieneinheiten (BE1, BE2) mittels der Funkeinheit der Datenbank (DB);
- Im Falle dass zumindest eine Bedieneinheit (BE1, BE2) gefunden wurde, Übermitteln zumindest eines Teils der Liste an die Bedieneinheit (BE1, BE2) mittels der Funkeinheit;
- Auswählen zumindest eines der in der Liste befindlichen Feldgeräte (FG1, FG2, FG3) mittels der Bedieneinheit (BE1, BE2);
- Erheben der aktuellen Ortsposition eines Bedieners mittels der Bedieneinheit (BE1, BE2);
- Lokalisieren des ausgewählten Feldgeräts (FG1, FG2, FG3) unter Einbeziehung der aktuellen Ortsposition der Bedieneinheit (BE1, BE2) und der Ortsinformation (OI1, OI2, OI3) des ausgewählten Feldgeräts (FG1, FG2, FG3) durch die Bedieneinheit (BE1, BE2);
- Aufsuchen des lokalisierten Feldgeräts (FG1, FG2, FG3) durch den Bediener mithilfe der Bedieneinheit (BE1, BE2); und
- Verbinden der Bedieneinheit (BE1, BE2) mit dem aufgesuchten Feldgerät (FG1, FG2, FG3) und Bedienen des Feldgeräts (FG1, FG2, FG3) mittels der Bedieneinheit (BE1, BE2) zum Beheben des Fehlers.

2. Verfahren nach Anspruch 1, wobei von der Datenbank (DB) die aktuellen Ortspositionen der gefundenen Bedieneinheit (BE1, BE2) abgefragt werden, und wobei die Datenbank (DB) die Liste an diejenige Bedieneinheit (BE1, BE2) übermittelt wird, deren aktuelle Ortsposition sich am nächstgelegenen zu zumindest einem der in der Liste enthaltenen Feldgeräte (FG1, FG2, FG3) befindet.

3. Verfahren nach zumindest einem der Ansprüche 1 oder 2,
wobei die Feldgeräte (FG1, FG2, FG3) in der Liste priorisiert aufgelistet werden, insbesondere nach der Kritikalität der jeweiligen Feldgeräte (FG1, FG2, FG3) für einen Prozess der Anlage und/oder nach der Schwere des aufgetretenen Fehlers von einem der Feldgeräte (FG1, FG2, FG3).

4. Verfahren nach Anspruch 3,
wobei ein Service-Pfad erstellt wird, indem die zumindest eine Bedieneinheit (BE1, BE2) nacheinander die Feldgeräte (FG1, FG2, FG3) entsprechend der auf der Liste angegebenen Reihenfolge lokalisiert und
wobei der Bediener die Feldgeräte (FG1, FG2, FG3) entsprechend des erstellten Service-Pfads aufsucht und bedient.

5. Verfahren nach zumindest einem der vorherigen Ansprüche,
wobei diejenigen Feldgeräte (FG1, FG2, FG3), für welche ein Servicestatus, bzw. ein Diagnosestatus eingetragen ist, zusammen mit der aktuellen Ortsposition der Bedieneinheit (BE1, BE2) auf einer Karte (KA) auf der Bedieneinheit (BE1, BE2) visualisiert werden.

6. Verfahren nach zumindest einem der vorherigen Ansprüche,
wobei die Datenbank (DB) während des Aufsuchens des lokalisierten Feldgeräts (FG1, FG2, FG3) überprüft, ob zum Beheben des Fehlers benötigte Informationen, bzw. Dateien auf der Bedieneinheit (BE1, BE2) vorhanden sind.

7. Verfahren nach Anspruch 6,
wobei im Falle, dass die zum Beheben des Fehlers benötigte Informationen, bzw. Dateien nicht auf der Bedieneinheit (BE1, BE2) vorhanden sind, diese automatisiert auf die Bedieneinheit (BE1, BE2) geladen werden.

8. Verfahren nach Anspruch 7,
wobei die zum Beheben des Fehlers benötigten Informationen, bzw. Dateien von der Datenbank (DB) auf die Bedieneinheit (BE1, BE2) geladen werden.

9. Verfahren nach zumindest einem Ansprüche 7 oder 8,
wobei zum Beheben des Fehlers benötigte Datei ein zur Bedienung des Feldgeräts (FG1, FG2, FG3) benötigter Gerätetreiber, bzw. eine Gerätebeschreibung, auf die Bedieneinheit (BE1, BE2) geladen wird, und/oder
wobei als zum Beheben des Fehlers benötigte Information ein Bedienhandbuch und/oder eine Gerätedokumentation des lokalisierten Feldgeräts (FG1, FG2, FG3) auf die Bedieneinheit (BE1, BE2) geladen werden[Anspruch 10].

10. Verfahren nach zumindest einem der vorherigen Ansprüche,
wobei während des Auffindens des lokalisierten Feldgeräts (FG1, FG2, FG3) Informationen bezüglich der Einbauart des Feldgeräts (FG1, FG2, FG3), insbesondere dessen Einbauhöhe und/oder dessen Einbauneigung, bzw. Einbauwinkel, von der Datenbank (DB) auf die Bedieneinheit (BE1, BE2) geladen und dem Bediener angezeigt werden.

11. Verfahren nach zumindest einem der vorherigen Ansprüche, wobei die Liste auf diejenigen Feldgeräte (FG1, FG2, FG3) beschränkt wird, deren jeweiliger Einbauort sich innerhalb eines festgelegten Umkreises von der aktuellen Ortsposition der Bedieneinheit (BE1, BE2) aus befindet.

12. Verfahren nach zumindest einem der vorherigen Ansprüche,
wobei die Datenbank (DB) in regelmäßigen, bzw. zyklischen Zeitabständen den aktuellen Status der Feldgeräte aktualisiert.

13. Verfahren nach zumindest einem der bisherigen Ansprüche,
wobei die Bedieneinheit (BE1, BE2) mittels einer Funkverbindung, insbesondere mittels WLAN, LTE, 5G oder mittels eines Meshed Networks, mit der Datenbank (DB) in Kommunikationsverbindung steht.

14. Verfahren nach zumindest einem der vorherigen Ansprüche,
wobei die Bedieneinheit (BE1, BE2) mit dem aufgesuchten Feldgerät (FG1, FG2, FG3) mittels einer drahtlosen oder einer drahtgebundenen Kommunikationsverbindung verbunden wird.

15. Bedieneinheit (BE1, BE2) ausgestaltet zum Einsatz in einem Verfahren nach zumindest einem der vorherigen Ansprüche.

## Claims

1. Procedure for troubleshooting in an automation engineering system, wherein the system has several field devices (FG1, FG2, FG3), which are mounted at distributed installation points, wherein said procedure comprises the following steps:
- Creation of a list of field devices (FG1, FG2, FG3) for which a service status or a diagnostic status is entered due to at least one error, as well as location information (OI1, OI2, OI3) corresponding to the installation locations of the field devices (FG1, FG2, FG3), by means of a database (DB),
wherein information on the current status and the location information (OI1, OI2, OI3) of each of the field devices (FG1, FG2, FG3) is saved in the database (DB), wherein the database (DB) has a radio unit;
- Search for operating units (BE1, BE2) that can be contacted by radio using the radio unit of the database (DB);
- In the event that at least one operating unit (BE1, BE2) is found: at least part of the list is transmitted to the operating unit (BE1, BE2) by means of the radio unit;
- Selection of at least one of the field devices (FG1, FG2, FG3) on the list using the operating unit (BE1, BE2);
- Determination of the current position of an operator using the operating unit (BE1, BE2);
- Location of the selected field device (FG1, FG2, FG3) using the current geographical location of the operating unit (BE1, BE2) and the location information (OI1, OI2, OI3) of the selected field device (FG1, FG2, FG3) by the operating unit (BE1, BE2);
- The located field device (FG1, FG2, FG3) is attended by the operator using the operating unit (BE1, BE2); and
- Connection of the operating unit (BE1, BE2) to the field device (FG1, FG2, FG3) that has been found and operation of the field device (FG1, FG2, FG3) using the operating unit (BE1, BE2) to correct the error.

2. Procedure as claimed in Claim 1,
wherein the database (DB) interrogates the current geographical locations of the operating unit (BE1, BE2) that is found, and
wherein the database (DB) transmits the list to the operating unit (BE1, BE2) whose current geographical location is closest to at least one of the field devices (FG1, FG2, FG3) contained in the list.

3. Procedure as claimed in at least one of the Claims 1 or 2,
wherein the field devices (FG1, FG2, FG3) are listed by priority in the list, particularly according to the criticality of the respective field devices (FG1, FG2, FG3) for a process of the system and/or according to the severity of the error that occurred from one of the field devices (FG1, FG2, FG3).

4. Procedure as claimed in Claim 3,
wherein a service path is created in that the at least one operating unit (BE1, BE2) locates the field devices (FG1, FG2, FG3) one after another according to the order specified in the list, and
wherein the operator attends and operates the field devices (FG1, FG2, FG3) according to the established service path.

5. Procedure as claimed in at least one of the previous claims,
wherein the field devices (FG1, FG2, FG3) for which a service status or a diagnostic status is entered are visualized together with the current geographical location of the operating unit (BE1, BE2) on a map (KA) on the operating unit (BE1, BE2).

6. Procedure as claimed in at least one of the previous claims, wherein, while the located field device (FG1, FG2, FG3) is attended, the database checks whether information or files that are required to rectify the error are available on the operating unit (BE1, BE2).

7. Procedure as claimed in Claim 6, wherein, in the event that information or files that are required to rectify the error are not available on the operating unit (BE1, BE2), they are automatically uploaded to the operating unit (BE1, BE2).

8. Procedure as claimed in Claim 7, wherein the information or files that are required to rectify the error are uploaded from the database (DB) to the operating unit (BE1, BE2).

9. Procedure as claimed in at least one of the Claims 7 or 8,
wherein a device driver or a device description, which is required to operate the field device (FG1, FG2, FG3), is uploaded to the operating unit (BE1, BE2) as a file that is required to rectify the error, and/or
wherein an operating manual and/or device documentation of the located field device (FG1, FG2, FG3) are uploaded to the operating unit (BE1, BE2) as the information that is required to rectify the error.

10. Procedure as claimed in at least one of the previous claims,
wherein, when attending the located field device (FG1, FG2, FG3), information concerning the type of installation of the field device (FG1, FG2, FG3), particularly its installation height and/or its installation inclination or installation angle, is uploaded from the database (DB) to the operating unit (BE1, BE2) and shown to the operator.

11. Procedure as claimed in at least one of the previous claims, wherein the list is limited to the field devices (FG1, FG2, FG3) whose installation location is within a defined radius of the current geographical location of the operating unit (BE1, BE2).

12. Procedure as claimed in at least one of the previous claims,
wherein the database (DB) updates the current status of the field devices at regular or cyclic intervals.

13. Procedure as claimed in at least one of the previous claims,
wherein the operating unit (BE1, BE2) has a communication connection to the database (DB) by means of a radio connection, particularly by means of WLAN, LTE, 5G or a meshed network.

14. Procedure as claimed in at least one of the previous claims,
wherein the operating unit (BE1, BE2) is connected to the field device (FG1, FG2, FG3) that is attended using a wireless or wired communication connection.

15. Operating unit (BE1, BE2) equipped for use in a procedure as claimed in at least one of the previous claims.

## Revendications

1. Procédé destiné à la suppression des défauts dans une installation de la technique d'automatisation, l'installation comportant une pluralité d'appareils de terrain (FG1, FG2, FG3), lesquels appareils qui sont montés à des emplacements de montage répartis, lequel procédé comprend les étapes suivantes :
- Création d'une liste des appareils de terrain (FG1, FG2, FG3) pour lesquels un état de service ou un état de diagnostic est enregistré en raison d'au moins un défaut, ainsi que des informations d'emplacement (OI1, OI2, OI3) correspondant aux emplacements de montage respectifs des appareils de terrain (FG1, FG2, FG3), au moyen d'une base de données (DB),
l'état actuel de chacun des appareils de terrain (FG1, FG2, FG3) ainsi que leurs informations d'emplacement (OI1, OI2, OI3) étant enregistrés dans la base de données (DB),
la base de données (DB) présentant une unité radio ;
- Recherche des unités de commande (BE1, BE2) pouvant être contactées par radio au moyen de l'unité radio de la base de données (DB) ;
- Dans le cas où au moins une unité de commande (BE1, BE2) a été trouvée : Transmission d'au moins une partie de la liste à l'unité de commande (BE1, BE2) au moyen de l'unité radio ;
- Sélection d'au moins un des appareils de terrain (FG1, FG2, FG3) se trouvant dans la liste au moyen de l'unité de commande (BE1, BE2) ;
- Détermination de la position locale actuelle d'un opérateur au moyen de l'unité de commande (BE1, BE2) ;
- Localisation de l'appareil de terrain sélectionné (FG1, FG2, FG3) en tenant compte de la position locale actuelle de l'unité de commande (BE1, BE2) et de l'information d'emplacement (OI1, OI2, OI3) de l'appareil de terrain sélectionné (FG1, FG2, FG3) par l'unité de commande (BE1, BE2) ;
- Recherche par l'opérateur de l'unité de terrain localisée (FG1, FG2, FG3) à l'aide de l'unité de commande (BE1, BE2) ; et
- Liaison de l'unité de commande (BE1, BE2) à l'appareil de terrain (FG1, FG2, FG3) recherché et commande de l'appareil de terrain (FG1, FG2, FG3) au moyen de l'unité de commande (BE1, BE2) en vue de la suppression du défaut.

2. Procédé selon la revendication 1,
pour lequel les positions locales actuelles de l'unité de commande (BE1, BE2) trouvée sont interrogées par la base de données (DB), et
pour lequel la base de données (DB) transmet la liste à l'unité de commande (BE1, BE2) dont la position locale actuelle se trouve la plus proche d'au moins l'un des appareils de terrain (FG1, FG2, FG3) contenus dans la liste.

3. Procédé selon au moins l'une des revendications 1 ou 2,
pour lequel les appareils de terrain (FG1, FG2, FG3) sont listés de manière prioritaire dans la liste, notamment en fonction de la criticité des appareils de terrain respectifs (FG1, FG2, FG3) pour un process de l'installation et/ou en fonction de la gravité du défaut survenu de l'un des appareils de terrain (FG1, FG2, FG3).

4. Procédé selon la revendication 3,
pour lequel un chemin de service est établi en localisant successivement les appareils de terrain (FG1, FG2, FG3) par l'au moins une unité de commande (BE1, BE2) selon l'ordre indiqué dans la liste, et
pour lequel l'opérateur recherche et commande les appareils de terrain (FG1, FG2, FG3) selon le chemin de service établi.

5. Procédé selon au moins l'une des revendications précédentes,
pour lequel les appareils de terrain (FG1, FG2, FG3), pour lesquels un état de service ou un état de diagnostic est enregistré, sont visualisés avec la position locale actuelle de l'unité de commande (BE1, BE2) sur une carte (KA) sur l'unité de commande (BE1, BE2).

6. Procédé selon au moins l'une des revendications précédentes, pour lequel la base de données (DB) vérifie, pendant la recherche de l'appareil de terrain localisé (FG1, FG2, FG3), si des informations ou des fichiers nécessaires à la suppression du défaut sont disponibles sur l'unité de commande (BE1, BE2).

7. Procédé selon la revendication 6, pour lequel, dans le cas où les informations ou les fichiers nécessaires pour supprimer le défaut ne sont pas disponibles sur l'unité de commande (BE1, BE2), ceux-ci sont chargés de manière automatisée sur l'unité de commande (BE1, BE2).

8. Procédé selon la revendication 7, pour lequel les informations ou les fichiers, qui sont nécessaires à la suppression du défaut, sont chargés de la base de données (DB) sur l'unité de commande (BE1, BE2).

9. Procédé selon au moins l'une des revendications 7 ou 8,
pour lequel un driver d'appareil, ou une description d'appareil, nécessaire à l'utilisation de l'appareil de terrain (FG1, FG2, FG3), est chargé sur l'unité de commande (BE1, BE2) en tant que fichier nécessaire à la suppression du défaut, et/ou
pour lequel un manuel d'utilisation et/ou une documentation de l'appareil de terrain localisé (FG1, FG2, FG3) sont chargés sur l'unité de commande (BE1, BE2) en tant qu'informations nécessaires à la suppression du défaut.

10. Procédé selon au moins l'une des revendications précédentes,
pour lequel, pendant la recherche de l'appareil de terrain localisé (FG1, FG2, FG3), des informations concernant le type de montage de l'appareil de terrain (FG1, FG2, FG3), notamment sa hauteur de montage et/ou son inclinaison de montage, ou son angle de montage, sont chargées de la base de données (DB) sur l'unité de commande (BE1, BE2) et sont affichées à l'opérateur.

11. Procédé selon au moins l'une des revendications précédentes, pour lequel la liste est limitée aux appareils de terrain (FG1, FG2, FG3) dont l'emplacement de montage respectif se trouve à l'intérieur d'un périmètre défini à partir de la position locale actuelle de l'unité de commande (BE1, BE2).

12. Procédé selon au moins l'une des revendications précédentes,
pour lequel la base de données (DB) met à jour l'état actuel des appareils de terrain à des intervalles de temps réguliers ou cycliques.

13. Procédé selon au moins l'une des revendications précédentes,
pour lequel l'unité de commande (BE1, BE2) est en liaison de communication avec la base de données (DB) au moyen d'une liaison radio, notamment au moyen d'un réseau WLAN, LTE, 5G ou au moyen d'un réseau maillé.

14. Procédé selon au moins l'une des revendications précédentes,
pour lequel l'unité de commande (BE1, BE2) est reliée à l'appareil de terrain (FG1, FG2, FG3) recherché au moyen d'une liaison de communication sans fil ou d'une liaison de communication filaire.

15. Unité de commande (BE1, BE2) conçue pour une utilisation dans un procédé selon au moins l'une des revendications précédentes.
